# EUROPÄISCHE PATENTSCHRIFT

(11) **EP 0 934 454 B1**
(45) Veröffentlichungstag und Bekanntmachung des Hinweises auf die Patenterteilung: **30.05.2001**
(21) Anmeldenummer: 97911239.8
(22) Anmeldetag: 22.10.1997
(51) Int. Cl.: E21D 21/02

(54) **VERANKERUNGSEINRICHTUNG MIT DEHNUNGSMESSUNG**
ANCHORING DEVICE WITH STRAIN MEASUREMENT SYSTEM
DISPOSITIF D'ANCRAGE A SYSTEME DE MESURE DE CONTRAINTE

(30) Priorität: 25.10.1996 DE 19644455
(43) Veröffentlichungstag der Anmeldung: 11.08.1999
(73) Patentinhaber: Geoforschungszentrum Potsdam, 14473 Postdam (DE)
(72) Erfinder: BORM, Günter, D-76227 Karlsruhe (DE); SCHMIDT-HATTENBERGER, Cornelia, D-12209 Berlin (DE)
(74) Vertreter: Hertz, Oliver, Dr.
(86) Internationale Anmeldenummer: EP9705835
(87) Internationale Veröffentlichungsnummer: WO9819044

(56) Entgegenhaltungen:
- ALAN D. KERSEY: "A Review of recent developments in fiber optic sensor technology" OPTICAL FIBER TECHNOLOGY, 13.Februar 1996, WASHINTONG DC, Seiten 291-317, XP002053711 in der Anmeldung erwähnt
- "Geotechnische Hilfsmittel bei der Sanierung alter Tunnelstrecken" FELSBAU , 1994, Seite 168 XP002053712 in der Anmeldung erwähnt
- PHILIP STJ. RUSSELL: "fibre gratins" PHYSICS WORLD, Oktober 1993, Seiten 41-46, XP002053713 in der Anmeldung erwähnt

## Beschreibung

Die Erfindung betrifft eine Verankerungseinrichtung, insbesondere ein Ankerelement für den Grundbau, Felsbau, Bergbau oder Massivbau, und eine Dehnungsmeßeinrichtung.

Beim Tunnelbau im Gebirge können wegen der Störung des Gebirgsgefüges beim Tunnelvortrieb und auch als natürliche Gegebenheiten Auflockerungen auftreten, die die Stabilität des Gebirges um den Tunnel herum verringern. Es ist bekannt, zur Erzielung einer genügenden Stabilität statt eines massiven Wandausbaus einen Verankerungsausbau mit verhältnismäßig dünnem Wandausbau vorzunehmen (Systemankerung).

Ein Anker besteht aus einer Stange mit einer anwendungsabhängigen Länge, die zur Einbriagung in das Gebirge (oder in der Bautechnik in eine Wand zur Bewehrung) vorgesehen ist. Das aus dem Gebirge oder der Wand ragende Ende besitzt einen sich quer zur Ausdehnung der Ankerstange erstreckenden Ankerkopf. Bislang haben sich Stahlanker und Anker aus Kompositmaterialien (z. B. glasfaserverstärkte Kunststoffmaterialien) bewährt. Letztere Materialien besitzen verschiedene Vorteile (siehe "Sicherungs- und Befestigungstechnik im Untertagebau" in: "Schweizer Baublatt", Nr. 24, 1994), die die leichte Herstellbarkeit, Korrosionsfestigkeit, Zerspanbarkeit, Biegsamkeit (insbesondere langer Anker) und eine extrem hohe Belastbarkeit umfassen. Die Anker werden kamm- oder igelartig in der Tunnelwandung quer zur Vortriebsrichtung oder als Vorausverankerung in Vortriebsrichtung angebracht.

Es ist bekannt, zur Beobachtung des Gesteins Kraft-, Wegoder Dehnungsmessungen durchzuführen, um rechtzeitig eventuelle Störungen oder langzeitige Störungen des Tragverhaltens des Gebirges zu erkennen.

Hierfür werden bisher Extensometer und Kraftmeßdosen verwendet. Ein Extensometer besteht aus einer in die Tunnelwand eingebrachten Kunststoffhülse mit einer am Hülsenboden befestigten Stahl- oder Glasfiberstange. Diese Hülse hat tunnelseitig ein offenes Ende. Zur Erfassung von Gebirgsbewegungen (Dehnung oder Stauchung der Hülse) wird der vom Stangenende zurückgelegte Weg gemessen. Derartige Extensometer werden an Meßstellen mehrfach gestaffelt mit unterschiedlichen Längen und damit unterschiedlichen Einbindungstiefen in jeweils ein gemeinsames Bohrloch installiert (Mehrfach-Stangenextensometer).

Die Extensometer sind nachteilig, da sie einen aufwendigen Aufbau und eine begrenzte Lebensdauer besitzen, gesondert neben den Ankern angebracht werden müssen, nur eine Dehnungsmessung, nicht jedoch eine Kraftmessung erlauben, und auf die Messung an bestimmten, vorher festzulegenden Meßstellen beschränkt sind. Außerdem läßt sich nicht erfassen, wo die Dehnung in der Längserstreckung der Stange am stärksten sind. Somit lassen sich keine Tiefenprofile innerhalb der Einzelstangen erfassen. Ähnliche Nachteile gelten für Extensometer auf optischer Basis (siehe z. B. Felsbau, 1994, Nr. 3, S. 168), wo am Ende einer optischen Meßstrecke ein Spiegel angebracht und eine Veränderung des Lichtweges erfaßt wird. Hierbei ist die Auswertung der Meßsignale außerordentlich aufwendig. Außerdem sind diese Extensometer auf Meßgenauigkeiten im mm-Bereich beschränkt.

Es ist allgemein bekannt, Lichtleiterfasern als Biegesensoren zu verwenden, indem biegeabhängige Transmissionsmessungen ausgewertet werden. Diese Meßtechnik ist jedoch als Intensitätsverfahren nur für geringe Genauigkeitsanforderungen geeignet, da beispielsweise Lichtquellen-Intensitätsschwankungen zu erheblichen Meßfehlern führen.

Aus dem Brücken- und Betonbau ist ferner bekannt, zur Dehnungsüberwachung sogenannte Fiber-Bragg-Gitter- oder FBG-Sensoren einzusetzen (siehe z. B. A. D. Kersey in "Optical Fiber Technology", Bd. 2, 1996, S. 291 ff.). Derartige Sensoren enthalten jeweils einen Lichtleiter mit einem integrierten, belastungsabhängig verschiedene Wellenlängen reflektierenden optischen Gitter. Die Sensoren sind so auf oder im Baumaterial eines Strukturelements z. B. aus Beton befestigt, daß Dehnungserscheinungen im Strukturelement oder Rißbildungen detektierbar sind.

Der herkömmliche Einsatz von FBG-Sensoren ist aus den folgenden Gründen nachteilig. FBG-Sensor sind bisher auf die Bautechnik, d.h. auf die Überwachung synthetischer Trage-Konstruktionen, beschränkt, da bislang keine Möglichkeit der Anbringung von FBG-Sensoren in natürliche Konstruktionen (z. B. in Gebirgsgestein) verfügbar ist. Außerdem sind FBG-Sensoren im Beton konstruktionsbedingt prinzipiell neben Stahlverstärkungen oder mit Abstand von diesen, nie jedoch in identischen Positionen mit den Stahlverstärkungen angebracht. Dadurch können immer nur relativ grobe, qualitative Aussagen über das Spannungsverhalten beispielsweise im Rahmen von Langzeitüberwachungen der Vorspannung in Stahlbewehrungen geliefert werden.

Der Verankerungsausbau im Tunnelbau erfordert in besonderem Maße eine genaue und örtlich möglichst gut auflösende Erfassung von eventuellen Instabilitäten im Gebirge. Hierbei bedeutet die ortsabhängige Auflösung sowohl eine enge Meßstellenverteilung längs zur Vortriebsrichtung als auch die Möglichkeit der Ortsauflösung quer zur Vortriebsrichtung. Eine hierfür geeignete Vorrichtung ist bislang nicht bekannt.

Aufgabe der Erfindung ist es daher, eine verbesserte Einrichtung zur Erfassung von Stabilitätsänderungen und Verformungen in der Umgebung von unter Verwendung von Wandankern ausgebauten Hohlräumen, insbesondere von Gebirgshohlraumbauten, anzugeben, mit der die Nachteile bekannter Systeme überwunden werden können. Aufgabe der Erfindung ist es ferner, ein Verfahren zur Verwendung einer derartigen Einrichtung anzugeben.

Diese Aufgabe wird durch eine Verankerungseinrichtung mit den Merkmalen gemäß Patentanspruch 1 bzw. ein Verfahren mit den Merkmalen gemäß Patentanspruch 11 gelöst. Vorteilhafte Ausführungsformen der Erfindung ergeben sich aus den abhängigen Ansprüchen.

Die Erfindung basiert auf der Idee, eine Verankerungseinrichtung oder ein Ankerelement mit einem Ankerstab, einem Ankerkopf und mindestens einem kraftschlüssig angebrachten Lichtleiter anzugeben, der mindestens ein integriertes Bragg'sches Gitter aufweist. Ein an sich bekanntes Ankerelement wird somit mit Lichtleitern mit dehnungsabhängigen Beugungseigenschaften (Reflexionseigenschaften) versehen, die sich in Längsrichtung des Ankerstabs erstrecken. Der oder die Lichtleiter sind zum Einsatz als FBG-Sensor(en) eingerichtet, der oder die in das Ankerelement integriert ist (sind). Jeder FBG-Sensor zeigt eine belastungsabhängige Wechselwirkung mit dem im Lichtleiter geführten Licht.

Lichtleiter mit integrierten optischen Gittern sind beispielsweise von P. Russell et al. in "Physics World" (Oktober 1993, S. 41 ff.) beschrieben. Es ist bekannt, daß in Ge-dotierten Glasfasern optische Gitter durch interferometrische Verfahren oder Maskierungstechniken einschreibbar sind. Ein Gitter wirkt auf der Grundlage der Bragg'schen Bedingungen als wellenlängenabhängiger Reflektor oder Transmitter. Da die Gittereigenschaften durch äußere Deformationen verändert werden, kann eine Änderung der Wellenlänge beispielsweise maximaler Reflexion oder einer anderen Bezugswellenlänge zur Erfassung von Verbiegungen des Lichtleiters mit der Möglichkeit einer Auswertung der Dehnungs- und Kraftverhältnisse genutzt werden.

Der erstmalig realisierte integrale Aufbau eines Ankerelements mit mindestens einem FBG-Sensor besitzt den wesentlichen Vorteil, daß jeder Sensor automatisch bei der Befestigung des Ankerelements in die zu verankernde und zu vermessende Konstruktion eingebracht wird. Ferner befindet sich jeder Sensor am Ort des Ankerelements, der den Zusammenhalt oder die Kohäsion des Gebirges erhöhen soll, und ermöglicht damit, mit hoher Genauigkeit Spannungen am Ort maximaler Kraftwirkungen zu erfassen. Die Ankerelemente werden funktionsgemäß in einer Hohlraum-Wandung, z. B. in der Tunnelwandung im Gebirge, vollvermörtelt oder vollverklebt, so daß eine optimale Kraftübertragung auf die Sensoren sichergestellt ist.

Gemäß einer bevorzugten Ausführungsform der Erfindung ist der Lichtleiter zur Bildung eines FGB-Sensors mit mindestens zwei Bragg'schen Gittern oder mit einer Gruppe voneinander beabstandeter Bragg'scher Gitter mit zum Ankerkopf hin sich verringernden Abständen versehen.

Ein besonderer Vorteil der Erfindung ergibt sich, wenn das Ankerelement mindestens zwei Lichtleiter aufweist, die parallel zur Längsachse des Ankerstabes verlaufen und eine Querschnittsfläche des Ankerstabes derart durchstoßen, daß die Durchstoßpunkte ein symmetrisches Vieleck, z. B. ein gleichseitiges Dreieck, bilden.

Erfindungsgemäße Ankerelemente bestehen vorzugsweise aus Glasfasermaterialien und sind einfach herstellbar, indem die Lichtleiter auf der Oberfläche oder jeweils in einer Oberflächennut des Ankerstabes mit einem Klebeharz befestigt sind.

Gegenstand der Erfindung ist auch ein Verfahren zur Erfassung von Kraft-, Dehnungs- und/oder Wegänderungen in einer Hohlraum-Wandung, bei dem ein oben beschriebenes erfindungsgemäßes Ankerelement verwendet wird. Die Messung wird statisch über lange Beobachtungszeiträume oder dynamisch nach einer mechanischen (z. B. Gebirgserschütterungen, Sprengung oder Anregung aus einer explorationsseismischen Quelle), thermischen oder hydraulischen Einwirkung auf die Hohlraum-Wandung, vorzugsweise während des Vorwärtsbaus eines Tunnels, durchgeführt, wobei jeweils mit jedem Bragg'schen Gitter eine Verschiebung einer charakteristischen Gitterreflexions-Wellenlänge erfaßt und daraus eine Krümmung, Stauchung oder Dehnung des Ankerstabs ermittelt wird.

Gegenstand der Erfindung sind ferner Verfahren zur Herstellung eines Ankerelements zur Verankerung von Hohlraum-Wandungen, bei dem mindestens ein Lichtleiter mit mindestens einem integrierten Bragg'schen Gitter kraftschlüssig mit dem Ankerelement verbunden wird und die Verwendung eines Lichtleiter mit mindestens einem integrierten Bragg'schen Gitter als Dehnungssensor in einem Ankerelement zur Befestigung von Hohlraumwandungen.

Gemäß einer besonderen Ausführungsform des Herstellungsverfahrens werden Lichtleiter mit integrierten Reflexionsgittern in Anker schon bei deren Herstellung eingefügt. Dies geschieht bei Stahlankern durch geeignete Verbindungsmittel und bei Kompositankern durch simultanes Herstellen des Ankerkörpers unter Einbau mindestens eines Lichtleiters, so daß dieser in den Ankerkörper voll integriert oder auf dessen Oberfläche fixiert ist, oder durch nachträgliches Einkleben mit einem Klebeharz in Nuten auf der Oberfläche des Ankerstabs.

Die Erfindung ist nicht auf Anwendungen im Untertagebau, Tunnelbau u dgl. beschränkt, sondern kann auch im Massivbau in Übertagebauwerken, z. B. in Brücken oder Staumauern eingesetzt werden. Sie kann nicht nur in Hohlraumwandungen, sondern auch in Stützkonstruktionen, z. B. zur Pfeiler-Längs- und Quermessung, im Bergbau oder bei Doppeltunneln oder im Massivbau eingesetzt werden.

Mit der Erfindung werden die folgenden weiteren Vorteile erzielt.

In jeden Anker ist kostengünstig und einfach ein Dehnungsmeßmittel integrierbar, so daß beim Ankerausbau eine enge Meßstellenverteilung gegeben ist. Die Meßgröße der Dehnungsmessung ist die Wellenlänge des an den Gittern reflektierten Lichtes. Die Wellenlänge ist eine absolute Größe, deren Übertragung keinen Störungen unterliegt und z. B. temperaturunabhängig ist. Das erfindungsgemäße System erlaubt die simultane Dehnungs- und Kraftmessung mit Ortsauflösung senkrecht zu einer verankerten Wandung. Ein Routineeinsatz der Dehnungsmessung wird ermöglicht, wenn das verhältnismäßig billige Meßmittel mit einer praktisch unbegrenzten Lebensdauer in jeden Anker eines Ausbaus integriert ist und die jeweilige Messung durch Ansatz eines mobilen optischen Detektors an den gewünschten Orten erfolgt. Die Erfindung erlaubt Meßgenauigkeiten bei der Erfassung von Verstellungen im Wandmaterial in der Größenordnung von Nanometern, wobei extrem kurze Ansprechzeiten (Meßfrequenzen bis rund 1 bis 5 kHz) erzielt werden.

Ausführungsformen der Erfindung werden unter Bezugnahme auf die beiliegenden Zeichnungen beschrieben. Es zeigen:
- Fig. 1:: Einzelheiten von Ausführungsformen eines erfindungsgemäßen Ankers in schematischen Längs- bzw. Querschnittansichten;
- Fig. 2:: eine weitere Ausführüngsform eines erfindungsgemäßen Ankers in schematischer Längsabschnittsansicht; und
- Fig. 3 :: ein Blockbild eines erfindungsgemäßen Meßsystems zur Erfassung von Dehnungs- und/oder Kraftänderungen.

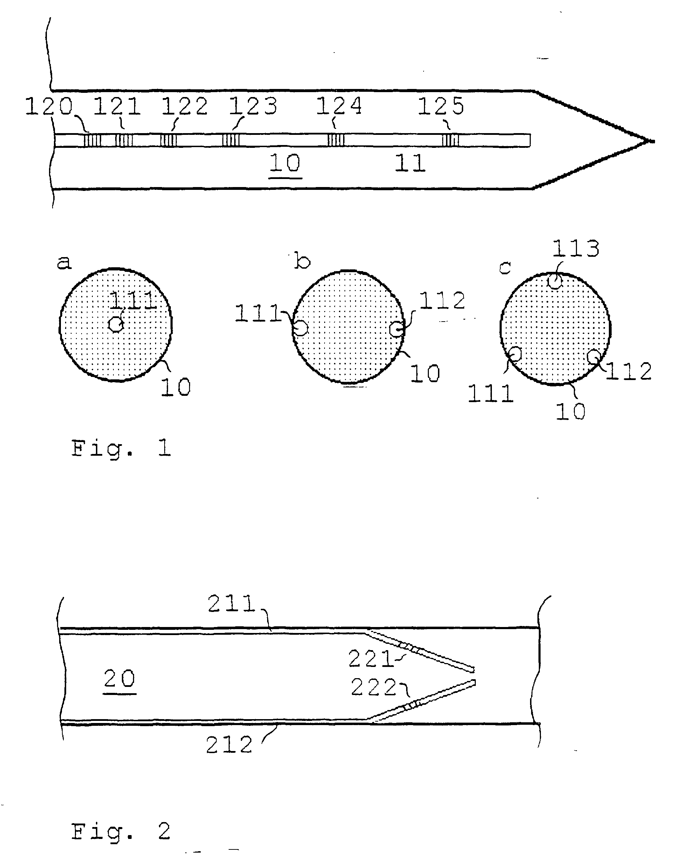

Figur 1 zeigt einen schematischen Längsschnitt durch den Ankerstab oder die Ankerstange 10 eines Ankers aus Verbundmaterial mit eingegossenem Lichtleiter 11. Der Lichtleiter 11 weist in bestimmten Abständen optische Gitter 120 bis 125 (Bragg'sche Gitter) auf, die zur wellenlängenabhängigen Reflexion von Meßlicht vorgesehen sind. Die Figur 1 ist nicht maßstabsgerecht. Die Dimensionen sind frei wählbar. Der Durchmesser des Ankerstabes kann beispielsweise rund 2 bis 4 cm betragen, wohingegen der Lichtleiter einen Durchmesser, der im Vergleich zum Stabdurchmesser vernachlässigbar klein ist, z. B. weniger als 1 mm, besitzt. Letzteres hat den Vorteil einer vereinfachten Anwendung der bekannten Dehnungsgesetze am gebogenen Balken zur Auswertung der Sensorsignale. Die Ankerstablänge kann beispielsweise 0.5 bis 2 m betragen.

Die kraftschlüssige Anbringung von einem oder mehreren Lichtleitern in einem Anker ist anwendungsabhängig. So ist es möglich, nur einen Lichtleiter zu integrieren, der konzentrisch im Anker angebracht ist (Querschnitt a). Ersatzweise können für simultane Biegungs- und Scherungsmessungen zwei diametral gegenüberliegende Lichtleiter in den Außenrand des Ankers verklebt oder eingegossen sein (Querschnitt b), oder es können drei Lichtleiter am Umfang des Ankers jeweils um 120° versetzt angeordnet sein. Letztere Ausführungsform eignet sich besonders für Messungen von Biegungen und Scherungen, deren Richtung von vornherein nicht bekannt ist. Es können auch mehr als drei Lichtleiter vorgesehen sein.

Die Lichtleiter verlaufen im wesentlichen entlang der Längserstreckung der Ankerstäbe. Sie können parallel zur Ankerstabmittelachse oder auch zumindest in Teilabschnitten in Bezug auf diese geneigt ausgerichtet sein. So ist gemäß einer besonderen Ausführungsform, die für richtungsselektive Messungen (siehe unten) eingerichtet ist, vorgesehen, die Lichtleiter über eine Teillänge der Ankerstaboberfläche in geraden Oberflächennuten zu fixieren. Die geraden Oberflächennuten gehen in einem vorbestimmten Bereich in Kanäle über, die durch den Ankerstab führen und in denen der jeweilige Lichtleiter wiederum fixiert ist. Die Kanäle sind gegenüber der Oberfläche geneigt und laufen aufeinander zu, so daß sie am Ankerfuß, im Mittelbereich oder an der Ankerspitze zusammenführen. Eine derartige Situation ist schematisch in Figur 2, bei der in einem Ankerstab 20 zur Dreipunkt-Dehnungsmessung abgewinkelte Lichtleiter 211, 212 jeweils mit mindestens einem Gitter 221, 222 verlaufen.

Jeder Lichtleiter enthält an vorbestimmten Positionen Reflexions-Gitter. Die Lichtleiter können in jeder geeigneten, an sich bekannten Weise hergestellt sein. Der Abstand der Gitter ist bei der Herstellung der Lichtleiter frei wählbar. Die Lichtleiter werden bei Tunnelbauanwendungen vorzugsweise so im Anker angeordnet, daß die Abstände der Gitter in Nähe des Ankerkopfes (d.h. in Nähe der Oberfläche der Wandung) geringer sind als die Abstände am vom Ankerkopf entfernten Ende. Damit wird der Erfahrung Rechnung getrage, daß in oberflächennahen Bereichen im an den Tunnel angrenzenden Gebirge besonders starke Kraft- und Dehnungsgradienten ausgebildet sind. Die Funktion des Abstandes der Gitter von der Tiefe im Gestein (bzw. von der Entfernung zum Ankerkopf) kann geeignet entsprechend den erwarteten Eigenschaften des Gesteins ausgewählt sein.

Die Vielzahl von Bragg'schen Gittern in den Lichtleitern eines Ankerstabes und/oder einer ganzen Gruppe von Ankerstäben bildet ein Array von Sensoren, deren Signale in einem mehrdimensionalen Raum (Orts- und Zeitkoordinaten) als Parameterfeld oder Spannungs- oder Dehnungsbild erfaß- und auswertbar sind. Dies kann aufgrund der kurzen Ansprechzeit mit einer einzigen Auswertungseinrichtung durch serielle Abfrage aller Sensoren erfolgen. Gemäß einer Ausführungsform der Erfindung ist in einem ausgebauten Tunnel jedes Ankerelement über Lichtleiter mit einer Beleuchtungs- und Auswertungseinrichtung beispielsweise in einer Überwachungsstation verbunden, von der zentral das Spannungsverhalten und eventuelle Absenkungen des Tunnels im Gebirge beobachtet werden. In diesem Fall ist an jedem Ankerkopf ein Ansatz zur optischen Verbindung des oder der Lichtleiter mit dem Lichtleiter zur Beleuchtungs- und Auswertungseinrichtung vorgesehen.

Die Biegungsmessung mit erfindungsgemäßen Ankerelementen erfolgt derart, daß die Änderung (Verschiebung) der Reflexionswellenlängen der Gitter erfaßt wird. Bei einer Dehnung des Lichtleiters erfolgt eine Verschiebung zu längeren Wellenlängen und bei einer Stauchung des Lichtleiters zu kürzeren Wellenlängen. Falls die Messung mit mehreren Lichtleitern je Ankerelement erfolgt, so kann aus der Verschiebung und der Position des jeweiligen Lichtleiters im oder auf dem Ankerstab entsprechend den Dehnungsgesetzen am gebogenen Balkens (Biegepfeil) die Richtung und Stärke der Kraftausübung ermittelt werden. Bei Auswertung der Sensorsignale eines Arrays von Gittern, das aus den Gittern verschiedener Ankerelemente zusammengesetzt ist, kann aus den Richtungsinformation aller Gitter die Quelle der Kraftwirkung im Gebirge lokalisiert werden. Damit können erfindungsgemäße Ankerelemente erstmalig simultan auch die Funktion von bisher eingesetzten Geophonen übernehmen, um seismische Informationen beim Tunnelbau zu liefern. Eine Wellenlängenverschiebung beträgt größenordnungsmässig rund 5 bis 8 nm.

Die richtungsselektive Messung erfolgt mit Gittern, die jeweils zu verschiedenen entweder geraden oder konvergent aufeinanderzulaufenden Lichtleitern (siehe Figur 2) gehören. Für den Fall der geraden Lichtleiter hat sich gezeigt, daß bei einer aus beliebiger Richtung einlaufenden Störung jedes Gitter eine charakteristische Wellenlängenverschiebung zeigt, der genau ein Wert zwischen maximaler Dehnung und maximaler Stauchung zuordenbar ist. Aus einem System von Gleichungen, deren Anzahl gleich der Anzahl der betrachteten Gitter ist, läßt sich dann aus den Dehnungsgesetzen die Richtung und der Betrag der Krafteinwirkung ermitteln. Bei konvergenten Lichtleitern erfolgt eine entsprechende Berechnung unter Berücksichtigung der Neigung der in den Kanälen positionierten Gitter gegenüber der Ankerstabausrichtung.

Eine Ortsauflösung längs in Ankerrichtung wird erreicht, indem erfaßt wird, welches der Gitter zu einer Reflexionsänderung führt. Hierzu sind die in Längsrichtung der Lichtleiterfaser angeordneten Gitter mit verschiedenen Gitterkonstanten hergestellt, so daß jedem Gitter (jeder Tiefe im Berg) jeweils eine andere Bezugswellenlänge zuordenbar ist.

Die Ortsauflösung kann auch erreicht werden, indem in Längsrichtung überall gleiche Gitterparameter vorgesehen sind, aber bei der optischen Messung durch Phasenlaufzeitmessungen bestimmt wird, welches Gitter zu einer Reflexionsänderung führte.

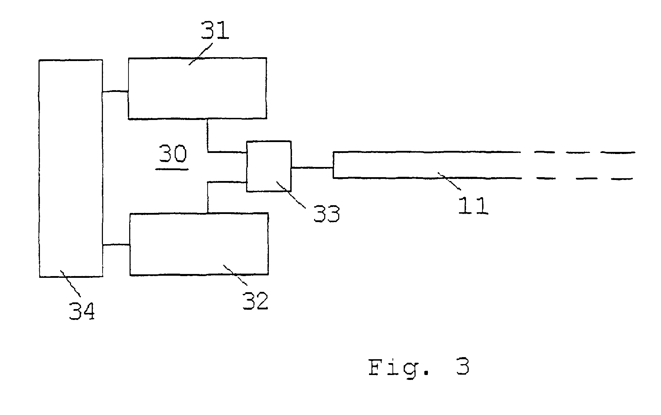

Die Messung mit erfindungsgemäßen Systemen erfolgt, indem ein Meßsystem mit einer Ankereinrichtung mit Dehnungsmeßmitteln in Verbindung gebracht wird. Ein Meßsystem 30 umfaßt gemäß Figur 3 eine Lichtquelle 31, eine Detektoreinheit 32, ein optisches Einkoppelmodul 33 und eine Steuer- und Auswertungseinrichtung 34. Die Lichtquelle wird vorzugsweise durch eine breitbandige Lichtquelle (weißes Licht) oder durch einen Laser (z. B. Faserlaser) mit abstimmbarer Emissionswellenlänge gebildet. Die Emissionswellenlänge ist unter den Wellenlängen ausgewählt, die üblicherweise in der Datenkommunikationstechnik verwendet werden (z. B. 800 nm oder länger). Die Detektoreinheit 32 enthält Sensormittel, denen bei Verwendung einer breitbandigen Lichtquelle Mittel zur Wellenlängenanalyse vorgeschaltet sind. Die Lichtquelle und die Steuer- und Auswertungseinrichtung können in einer Beleuchtungs- und Auswertungseinrichtung integriert sein.

Der Einsatz eines Lasers mit einzelner, abstimmbarer Emissionswellenlänge hat den Vorteil, daß bei der Messung die bestimmten Wellenlängen entsprechend den einzelnen Bragg'schen Gittern gezielt eingestellt werden können.

Das Meßlicht wird in den Lichtleiter (vorzugsweise Monomodefaser) eingestrahlt und simultan das von der Faser reflektierte Licht wellenlängenselektiv erfaßt. Eine Änderung der Reflexion bei einer Bezugswellenlänge oder die Änderung der Wellenlänge maximaler Reflexion wird von der Detektoreinheit erfaßt und an die Steuer- und Auswertungseinrichtung weitergegeben. Letztere kann geeignete Anzeige- oder Signalmittel enthalten, um einen bedrohlichen Zustand anzuzeigen.

Das Meßsystem kann mobil ausgeführt sein, so daß zur Dehnungsund Kraftmessung das System an den jeweils interessierenden Anker gehalten wird. Es kann aber auch ortsfest an bestimmten Positionen im Tunnel angeordnet und mit einer Vielzahl von Meßmitteln in den Verankerungen aufeinanderfolgend verbindbar sein.

Beim Verfahren zur Herstellung des Ankerelements mit mindestens einem kraftschlüssig befestigten Lichtleiter mit integrierten Bragg'schen Gittern wird der Lichtleiter vorzugsweise in einer Nut auf der Ankerstaboberfläche befestigt. Bei Kompositankern erfolgt eine Klebung mit einem Klebeharz. Vor der Klebung wird die Faser beim Einlegen in die Nut vorgespannt. Die Vorspannung ist so stark, daß die Faser gerade und ohne vom Nutverlauf abweichende Krümmungen in der Nut, vorzugsweise auf dem Nutboden aufliegend, verläuft. Der Klebeharz ist bevorzugt identisch mit dem Klebeharz zur Befestigung der Anker im Gebirgsmaterial. Erfindungsgemäß muß der Lichtleiter nicht gerade durch das Ankerelement verlaufen. Es ist auch möglich, Krümmungen oder Schleifen vorzusehen.

Das Aüsgangssignal von FGB-Sensoren ist grundsätzlich temperaturabhängig. Es kann daher vorgesehen sein, in ein Ankerelement zusätzlich eine nicht kraftschlüssig befestigte Faser als Referenz zur Temperaturmessung einzubringen. Diese Referenzfaser liegt lose in einem gesonderten Kanal. Bei der Anwendung im Gebirgs-Tunnelbau kann aber vorteilhafterweise auf die Referenzfaser verzichtet werden, da die Temperaturen im Tunnel gewöhnlich auf rd. 1/10 Grad konstant sind, so daß dort die Messung nach einer einmaligen Kalibrierung erfolgen kann.

## Patentansprüche

1. Verankerungseinrichtung mit einem Ankerstab, einem Ankerkopf und mindestens einem kraftschlüssig angebrachten Lichtleiter, der mindestens ein integriertes Bragg'sches Gitter aufweist und zur Dehnungs- und/oder Kraftmessung in Wandungen von Hohlräumen eingerichtet ist.

2. Verankerungseinrichtung gemäß Anspruch 1, bei der der Lichtleiter mit mindestens zwei Bragg'schen Gittern versehen ist.

3. Verankerungseinrichtung gemäß Anspruch 1 oder 2, bei der der Lichtleiter mit einer Gruppe voneinander beabstandeter Bragg'scher Gitter versehen ist, wobei die Abstände der Bragg'schen Gitter nahe dem Ankerkopf geringer sind als die Abstände der Bragg'schen Gitter nahe dem Ende des Ankerstabes.

4. Verankerungseinrichtung gemäß Anspruch 1, 2 oder 3, bei der mindestens zwei Lichtleiter vorgesehen sind, die zumindest über einen Teilbereich des Ankerstabes parallel zur Längsachse des Ankerstabes verlaufen und symmetrisch zu dieser angebracht sind.

5. Verankerungseinrichtung gemäß Anspruch 4, bei der drei Lichtleiter vorgesehen sind, die zumindest über einen Teilbereich des Ankerstabes parallel zur Längsachse des Ankerstabes verlaufen und deren Durchstoßpunkte auf einer Querschnittsfläche des Ankerstabes ein gleichseitiges Dreieck bilden.

6. Verankerungseinrichtung gemäß einem der vorhergehenden Ansprüche, bei der der oder die Lichtleiter auf der Oberfläche oder jeweils in einer Oberflächennut des Ankerstabes befestigt sind.

7. Verankerungseinrichtung gemäß Anspruch 4, bei der die Lichtleiter in einem weiteren Teilbereich des Ankerstabes in Bezug auf die Längsachse des Ankerstabes geneigt, in Kanälen im Ankerstab fixiert verlaufen.

8. Verankerungseinrichtung gemäß Anspruch 7, bei der mehrere geneigt verlaufende Lichtleiter konvergent in einem Spitzenbereich zusammenlaufen.

9. Verankerungseinrichtung gemäß einem der vorhergehenden Ansprüche, bei der der oder die Lichtleiter im Ankerstab bei dessen Herstellung integriert oder am Ankerstab mit einem Klebeharz befestigt sind, der zum Einkleben des Ankerstabes in der Hohlraumwandung vorgesehen ist.

10. Verankerungseinrichtung gemäß einem der vorhergehenden Ansprüche, bei der am Ankerkopf ein Ansatz zur optischen Verbindung des oder der Lichtleiter mit einer Beleuchtungsund Auswertungseinrichtung vorgesehen ist

11. Verfahren zur Erfassung von Kraft-, Dehnungs- und/oder Wegänderungen in einer Hohlraum-Wandung, die mit einer Verankerungseinrichtung gemäß einem der Ansprüche 1 bis 10 versehen ist, wobei mit jedem Bragg'schen Gitter eine Verschiebung einer charakteristischen Gitterreflexions-Wellenlänge erfaßt und daraus eine Krümmung, Dehung oder Stauchung des Ankerstabs ermittelt wird.

12. Verfahren gemäß Anspruch 11, bei dem die Verschiebung der Gitterreflexions-Wellenlänge und die Krümmung, Stauchung oder Dehnung des Ankerstabs jeweils nach einer mechanischen, thermischen oder hydraulischen Einwirkung auf die Hohlraum-Wandung erfaßt werden.

13. Verfahren gemäß Anspruch 11, bei dem die Verschiebung der Gitterreflexions-Wellenlänge und Krümmung, Stauchung oder Dehnung des Ankerstabs ununterbrochen erfaßt werden und ein Alarmsignal erzeugt wird, falls die Krümmung, Stauchung oder Dehnung vorbestimmte Grenzwerte überschreiten.

14. Verfahren gemäß einem der Ansprüche 11 bis 13, bei dem mit einer Vielzahl von Bragg'schen Gittern ein mehrdimensionales Spannungs- und Dehnungsbild der Hohlraum-Wandung erfaßt wird.

## Claims

1. An anchoring device with an anchor rod, an anchor head and at least one light guide which is fitted in firm, force-transmitting manner and comprises at least one integrated Bragg grating and is adapted for measuring strain and/or force in walls of hollow spaces.

2. An anchoring device according to claim 1, in which the light guide is provided with at least two Bragg gratings.

3. An anchoring device according to claim 1 or 2, in which the light guide is provided with a group of Bragg gratings spaced from one another, wherein the spacings of the Bragg gratings near the anchor head are smaller than the spacings of the Bragg gratings near the end of the anchor rod.

4. An anchoring device according to claim 1, 2 or 3, in which at least two light guides are provided and run parallel to the longitudinal axis of the anchor rod at least over a part region of the anchor rod and are arranged symmetrically relative thereto.

5. An anchoring device according to claim 4, in which three light guides are provided and run parallel to the longitudinal axis of the anchor rod at least over a part region of the anchor rod and whose points of passage through a cross-sectional surface of the anchor rod form an equilateral triangle.

6. An anchoring device according to any of the preceding claims, in which the light guide or guides are fixed on the surface or in respective surface grooves of the anchor rod.

7. An anchoring device according to claim 4, in which the light guides extend in a further part region of the anchor rod at an inclination relative to the longitudinal axis of the anchor rod, fixed in channels in the anchor rod.

8. An anchoring device according to claim 7, in which the plurality of light guides running at an inclination converge in a tip region.

9. An anchoring device according to any of the preceding claims, in which the light guide or guides are integrated in the anchor rod during its production or are fixed on the anchor rod by an adhesive resin, which is provided for bonding the anchor rod into the hollow space wall.

10. An anchoring device according to any of the preceding claims, in which a fitting is provided on the anchor head for optical coupling of the light guide or guides to an illuminating and evaluating device.

11. A method of detecting alterations in force, strain and/or path in a hollow space wall which is provided with an anchoring device according to any of claims 1 to 10, wherein a shift of a characteristic grating reflection wavelength is detected with each Bragg grating and a curvature, extension or compression of the anchor rod is determined therefrom.

12. A method according to claim 11, in which the shift of the grating reflection wavelength and the curvature, compression or extension of the anchor rod is determined in each case according to a mechanical, thermal or hydraulic effect on the hollow space wall.

13. A method according to claim 11, in the shift of the grating reflection wavelength and the curvature, compression or extension of the anchor rod are detected without interruption and an alarm signal is generated should the curvature, compression or extension exceed predetermined limit values.

14. A method according to any of claims 11 to 13, in which a multi-dimensional stress and strain picture of the hollow space wall is determined with a plurality of Bragg gratings.

## Revendications

1. Dispositif d'ancrage comprenant une tige d'ancrage, une tête d'ancrage et au moins un guide d'ondes optiques monté par conjugaison de force, lequel présente au moins une grille de Bragg intégrée et est conçu pour effectuer des mesures d'allongement et/ou de force dans les parois des cavités.

2. Dispositif d'ancrage selon la revendication 1, dans lequel le guide d'ondes optiques est muni d'au moins deux grilles de Bragg.

3. Dispositif d'ancrage selon la revendication 1 ou 2, dans lequel le guide d'ondes optiques est muni d'un groupe de grilles de Bragg disposées à une distance donnée les unes des autres, les distances entre les grilles de Bragg étant plus faibles à proximité de la tête d'ancrage que les distances entre les grilles de Bragg à proximité de l'extrémité de la tige d'ancrage.

4. Dispositif d'ancrage selon la revendication 1, 2 ou 3, dans lequel il est prévu au moins deux guides d'ondes optiques qui, au moins sur une partie de la tige d'ancrage, s'étendent parallèlement à l'axe longitudinal de la tige d'ancrage et sont disposés symétriquement à celle-ci.

5. Dispositif d'ancrage selon la revendication 4, dans lequel il est prévu trois guides d'ondes optiques qui, au moins sur une partie de la tige d'ancrage, s'étendent parallèlement à l'axe longitudinal de la tige d'ancrage et dont les points de percée forment un triangle équilatéral sur une surface transversale de la tige d'ancrage.

6. Dispositif d'ancrage selon l'une quelconque des revendications précédentes, dans lequel le ou les guide(s) d'ondes optiques est (sont) fixé(s) sur la surface ou chacun dans une rainure de la surface de la tige d'ancrage.

7. Dispositif d'ancrage selon la revendication 4, dans lequel les guides d'ondes optiques, dans une autre partie de la tige d'ancrage, sont inclinés par rapport à l'axe longitudinal de la tige d'ancrage et sont fixés dans des gorges réalisées dans la tige d'ancrage.

8. Dispositif d'ancrage selon la revendication 7, dans lequel plusieurs guides d'ondes optiques s'étendant de manière inclinée et convergent dans une zone en pointe.

9. Dispositif d'ancrage selon l'une quelconque des revendications précédentes, dans lequel le ou les guide(s) d'ondes est (sont) intégré(s) dans la tige d'ancrage au moment de la fabrication de celle-ci ou est (sont) fixé(s) contre la tige d'ancrage par une résine adhésive, qui est prévue pour coller la tige d'ancrage dans la paroi de la cavité.

10. Dispositif d'ancrage selon l'une quelconque des revendications précédentes, dans lequel il est prévu de réaliser sur la tête d'ancrage une saillie destinée à la liaison optique du ou des guide(s) d'ondes optiques avec un dispositif d'éclairage et d'analyse.

11. Procédé destiné à enregistrer les variations de force, d'allongement et/ou de déplacement dans une paroi d'une cavité, qui est munie d'un dispositif d'ancrage selon l'une quelconque des revendications 1 à 10, dans lequel procédé on utilise chaque grille de Bragg pour enregistrer un trajet d'une longueur d'onde caractéristique de la réflexion de la grille et, à partir de cette valeur, on détermine un gauchissement, un allongement ou un aplatissement de la tige d'ancrage.

12. Procédé selon la revendication 11, dans lequel le trajet de la longueur d'onde de la réflexion de la grille et le gauchissement, l'aplatissement ou l'allongement de la tige d'ancrage sont enregistrés chacun à la suite d'une action mécanique, thermique ou hydraulique exercée sur la paroi de la cavité.

13. Procédé selon la revendication 11, dans lequel le trajet de la longueur d'onde de la réflexion de la grille et le gauchissement, l'aplatissement ou l'allongement de la tige d'ancrage sont enregistrés en continu et un signal d'alarme est généré dans le cas où la valeur du gauchissement, de l'aplatissement ou de l'allongement dépasse une valeur de seuil prédéfinie.

14. Procédé selon l'une quelconque des revendications 11 à 13, dans lequel une pluralité de grilles de Bragg permettent d'enregistrer une représentation pluridimensionnelle de l'aplatissement et de l'allongement de la paroi de la cavité.
